# EUROPEAN PATENT SPECIFICATION

(11) **EP 1 708 134 B1**
(45) Date of publication and mention of the grant of the patent: **30.12.2020**
(21) Application number: 06006533.1
(22) Date of filing: 29.03.2006
(51) Int. Cl.: G06Q 10/10, H04M 1/725

(54) **Device and method for managing event information in wireless terminal**
Vorrichtung und Verfahren zur Verwaltung von Ereignisinformationen eines drahtlosen Endgerätes
Dispositif et procédé pour gérer des informations d'événements d'un terminal sans fil

(30) Priority: 01.04.2005 KR 20050027724
(43) Date of publication of application: 04.10.2006
(73) Proprietor: Unwired Planet International Limited, Dublin 18 (IE)
(72) Inventor: Baek, Su-A, Yeongtong-gu Suwon-si Gyeonggi-do (KR); Suk, Ji-Won, Yeongtong-gu Suwon-si Gyeonggi-do (KR); Choi, Seung-Chul, Yeongtong-gu Suwon-si Gyeonggi-do (KR)
(74) Representative: Grünecker Patent- und Rechtsanwälte PartG mbB

(56) References cited:
- EP-A- 0 358 301
- US-A- 6 064 975
- "Using you Treo 650 smartphone" [Online] 2004, PALMONE , XP002393281 Retrieved from the Internet: URL:http://euro.palm.com/europe/en/support /handbooks/Treo650_Handbook_en.pdf> * page 58 - page 82 * * page 101 - page 112 *

## Description

### BACKGROUND OF THE INVENTION

### Field of the Invention:

The present invention relates generally to a method for managing event information in a wireless terminal. In particular, the present invention relates to a device and method for simply and conveniently managing event information such as various schedules, anniversaries, memos, and TO-DO items in a wireless terminal.

### Description of the Related Art:

A wireless terminal typically includes various service functions in addition to a basic call service function. Among them, in particular, event information functions such as schedules, memos, and anniversaries, provide a convenience by informing a user of the wireless terminal of a registered specific date in an automatic manner.

However, the user is required to convert the wireless terminal to display a menu of the event information in order to register the event information. For example, when the user intends to input the schedule and anniversary on the same date, there is an inconvenience in that the user is required to convert the wireless terminal to display a schedule menu and register a schedule of the corresponding date and then, is required to again convert the wireless terminal to display an anniversary menu and register an anniversary of the corresponding date. Further, there is an inconvenience in that the user is required to convert the wireless terminal to display the menus of the respective event information, in order to display the registered event information.

"Using your Treo605 smartphone" [online] 2004, PALMONE, XP002393281 retrieved from the internet:
URL: http://euro.palm.com/europe/en/support/handbooks/Treo650 Handbook en.pdf discloses a user manual of a TREO 650 smart phone PALM wherein the tasks application a sorting operating can be made on tasks.

US6064975 discloses an apparatus and method for highlighting holidays in a calendar software application of a portable intelligent communications device or in a separate computer, including the steps of specifying a geographical location, determining holidays for the geographical location, depicting a calendar on a display screen of such portable intelligent communications device or computer, and depicting holidays in a fashion different from other days on the calendar. The geographical location information is specified by the current location of the portable intelligent communications device or via a graphical user interface. The holiday information is obtained from a database housed in the portable intelligent communications device or via an Internet address connected through communications circuitry of the portable intelligent communications device. The holidays for the geographical location may be depicted in a color different from the other dates on the calendar and each holiday name may be depicted on the appropriate date of the calendar.

Accordingly, a need exists for a device and method to simply and conveniently manage event information in a wireless terminal.

### SUMMARY OF THE INVENTION

It is, therefore, an object of embodiments of the present invention to substantially solve the above and other problems, and provide a device and method for simply and conveniently managing event information such as various schedules, anniversaries, memos, and TO-DO items in a wireless terminal.

This object is achieved by the features of the independent claims. Preferred embodiments are defined in the dependent claims.

### BRIEF DESCRIPTION OF THE DRAWINGS

The above and other objects, features and advantages of embodiments of the present invention will become more apparent from the following detailed description when taken in conjunction with the accompanying drawings, in which:
FIG. 1 illustrates a construction of an exemplary wireless terminal according to an embodiment of the present invention;
FIG. 2 illustrates a view mode of an exemplary wireless terminal according to an embodiment of the present invention;
FIG. 3 illustrates a process of registering a schedule as event information in an exemplary wireless terminal according to an embodiment of the present invention;
FIG. 4 illustrates a process of registering an anniversary as event information in an exemplary wireless terminal according to an embodiment of the present invention;
FIG. 5 illustrates a process of registering a memo as event information in an exemplary wireless terminal according to an embodiment of the present invention;
FIG. 6 illustrates a process of registering a TO-DO item as event information in an exemplary wireless terminal according to an embodiment of the present invention;
FIG. 7 illustrates a process of "Go to" in an exemplary wireless terminal according to an embodiment of the present invention;
FIG. 8 illustrates a process of "Sort by schedule" as event information in an exemplary wireless terminal according to an embodiment of the present invention;
FIG. 9 illustrates a process of "Sort by anniversary" as event information in an exemplary wireless terminal according to an embodiment of the present invention;
FIG. 10 illustrates a process of "Sort by memo" as event information in an exemplary wireless terminal according to an embodiment of the present invention;
FIG. 11 illustrates a process of "Sort by TO-DO" as event information in an exemplary wireless terminal according to an embodiment of the present invention;
FIG. 12 illustrates a process of sending event information in an exemplary wireless terminal according to an embodiment of the present invention; and
FIG. 13 illustrates a process of deleting event information in an exemplary wireless terminal according to an embodiment of the present invention.
Throughout the drawings, like reference numerals will be understood to refer to like parts, components and structures.

### DETAILED DESCRIPTION OF THE EXEMPLARY EMBODIMENTS

A number of exemplary embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

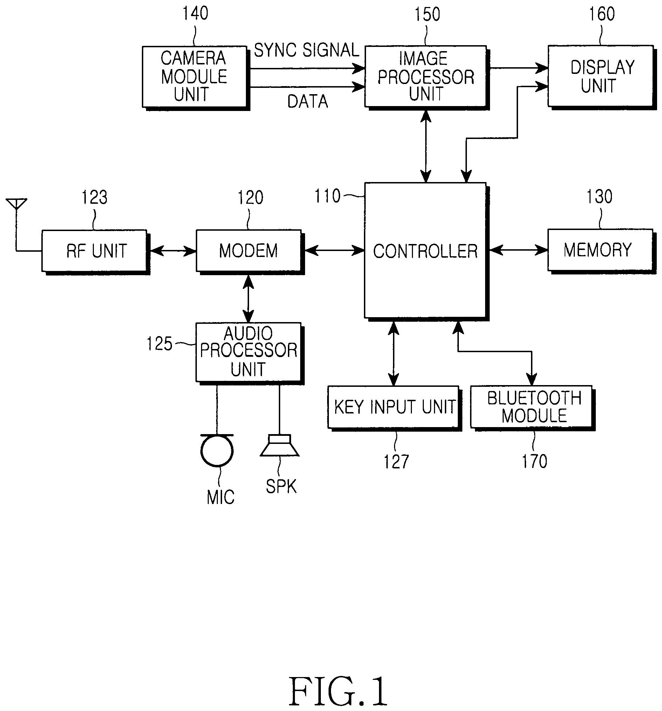

FIG. 1 illustrates a construction of an exemplary wireless terminal including a camera according to an embodiment of the present invention.

Referring to FIG. 1, the wireless terminal comprises a controller 110, a modem 120, a radio frequency (RF) unit 123, an audio processor 125, a key input unit 127, a memory 130, a camera module unit 140, an image processor unit 150, a display unit 160, a Bluetooth module 170, and at least one of a microphone MIC and a speaker SPK. The radio frequency (RF) unit 123 performs a wireless communication of the wireless terminal. The RF unit 123 comprises an RF transmitter for up-converting a frequency of a transmission signal and amplifying the transmission signal, and an RF receiver for low-noise amplifying a reception signal and down-converting a frequency of the reception signal. The modulator/demodulator (MODEM) 120 comprises a transmitter for encoding and modulating the transmission signal, and a receiver for demodulating and decoding the reception signal. The audio processor unit 125 can comprise a COder/DECoder (CODEC). The codec comprises a data codec for processing packet data, and an audio codec for processing an audio signal such as voice. The audio processor unit 125 receives a digital audio signal from the modem 120, converts the received digital audio signal into an analog audio signal through the audio codec, and reproduces the analog audio signal. The audio processor unit 125 also receives an analog audio signal generated from the microphone MIC, converts the received analog audio signal into a digital audio signal through the audio codec, and transmits the digital audio signal to the modem 120. The codec can be provided separately or can be included in the controller 110.

The memory 130 can comprise a program memory and a data memory. The program memory can store programs for controlling a general operation of the wireless terminal, and programs for controlling registration and management of event information in the wireless terminal according to an embodiment of the present invention. The data memory temporarily stores data generated in the execution of the programs. The memory 130 preferably registers and stores a variety of event information such as schedules, anniversaries, memos, and TO-DO items according to an embodiment of the present invention.

The controller 110 controls the general operation of the wireless terminal. The controller 110 can also comprise the modem 120 and the codec. The controller 110 controls and displays the event information in a month view mode, a week view mode, and a day view mode, but is not limited thereto. The controller 110 controls registration, sort, "Go to," sending, and deletion functions of event information, while controlling event information general operations according to an embodiment of the present invention.

The camera module unit 140 comprises a camera sensor for photographing image data and converting a photographed light signal into an electric signal, and a signal processor for converting an analog image signal photographed in the camera sensor into digital data. The camera sensor is preferably embodied as a charge-coupled device (CCD) sensor, and the signal processor can be embodied as a digital signal processor (DSP), but each are not limited thereto. The camera sensor and the signal processor can be embodied in an integral component or in separate components.

The image processor unit 150 generates screen data for displaying the image signal output from the camera module unit 140. The image processor unit 150 receives the image signal from the camera module unit 140, processes the received image signal on a per-frame basis, and outputs frame image data adapted to a characteristic and size of the display unit 160. The image processor unit 150 including an image codec, compresses the frame image data displayed on the display unit 160 in a predetermined type or restores the compressed frame image data into original frame image data. The image codec can be a joint photographic experts group (JPEG) codec, a motion picture experts group-4 (MPEG4) codec, or a Wavelet codec, but is not limited thereto. The image processor unit 150 preferably includes a function of an on screen display (OSD), and can output OSD data depending on a size of a screen displayed under the control of the controller 110.

The display unit 160 receives the image signal from the image processor unit 150 and displays the received image signal on a screen, and receives user data from the controller 110 and displays the received user data on the screen. The display unit 160 can employ a liquid crystal display (LCD), but is not limited thereto. In this case, the display unit 160 can further comprise an LCD controller, a memory for storing the image data, and an LCD element. In the case where the LCD is embodied as a touch screen type, the LCD can be also operate as an input unit. Further, the display unit 160 displays event information in at least one of the month view mode, week view mode, and day view mode according to an embodiment of the present invention.

The key input unit 127 comprises input keys for inputting numeral and character information, and function keys for setting a variety of functions.

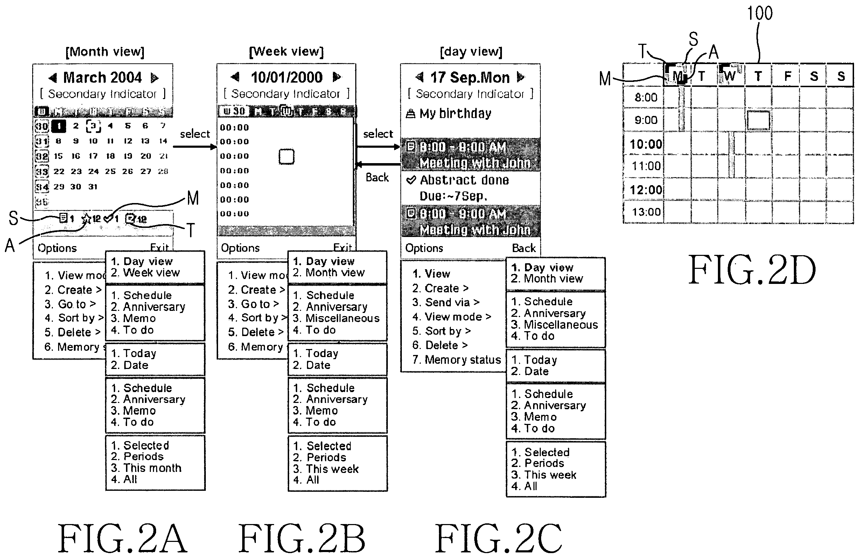

A procedure of managing event information in an exemplary wireless terminal will now be described in detail with reference to FIGS. 2 to 13. In an exemplary embodiment of the present invention, a description will now be made with a menu of event information exemplified as the schedule, the anniversary, the memo, and the TO-DO items.

FIG. 2 illustrates a view mode of an exemplary wireless terminal according to an embodiment of the present invention.

An operation of the view mode will now be described with reference to FIG. 2. When "calendar" is selected from a menu of the wireless terminal, the controller 110 detects the selection of the "calendar" and displays the event information in the month view mode as shown in FIG. 2A. In an exemplary embodiment of the present invention, a description will be made on the assumption for example, that the month view mode is a default value. In the month view mode, the menu and the number of times of registration of the registered event information are displayed on a corresponding month, by a numeral and an icon corresponding to the numeral. As shown in FIG. 2A, an icon (S) representing the schedule event information, an icon (A) representing the anniversary event information, an icon (M) representing memo event information, and an icon (T) representing the TO-DO event information, are displayed correspondingly to the number of times of the registration.

If "Week view" is selected from a menu of the view mode in the month view mode, the controller 110 detects the selection of the "Week view" and displays a week view mode as shown in FIG. 2B. If "Day view" is selected in the week view mode, the controller 110 detects the selection of the "Day view" and displays a day view mode as shown in FIG. 2C. If "Month view" is selected in the day view mode, the controller 110 detects the selection of the "Month view" and displays a month view mode as shown in FIG. 2A.

In the selection of the view mode, whenever a predetermined key is pressed, the month view mode of FIG. 2A, the week view mode of FIG. 2B, and the day view mode of FIG. 2C including a selected day, can be repeatedly displayed.

In the week view mode of FIG. 2B, corresponding dates of one week can be sorted and registered by time and, as shown in FIG. 2D, the menu 100 of the registered event information is displayed at a corresponding time of a corresponding date. In the menu 100 of the event information of FIG. 2D, a timetable of the registered schedule is displayed.

As shown in FIG. 2D, the menu of the registered event information can be displayed at a weekday corresponding to a corresponding date. In an exemplary embodiment of the present invention as shown in FIG. 2D, the menu of the registered event information can be colored and distinguished, such as distinguishing the icon (S) for indicating the menu of the schedule event information by using a blue color, distinguishing the icon (A) for indicating the menu of the anniversary event information by using an orange color, distinguishing the icon (M) for indicating the menu of the memo event information by using a green color, and distinguishing the icon (T) for indicating the menu of the TO-DO event information by using a red color.

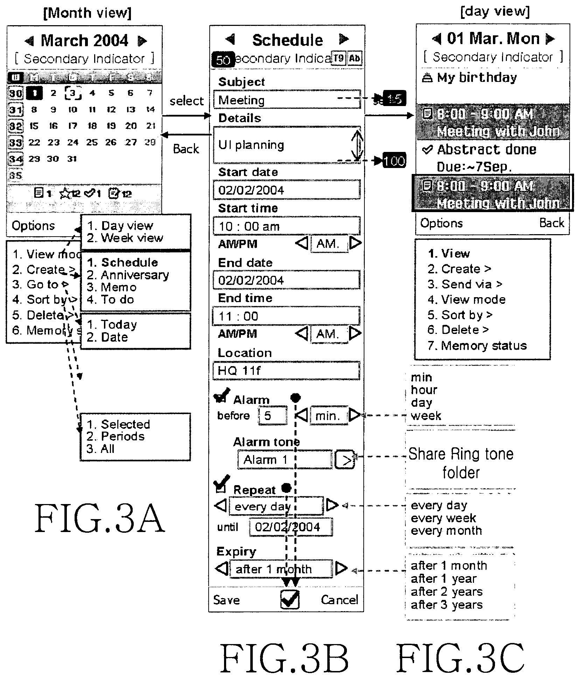

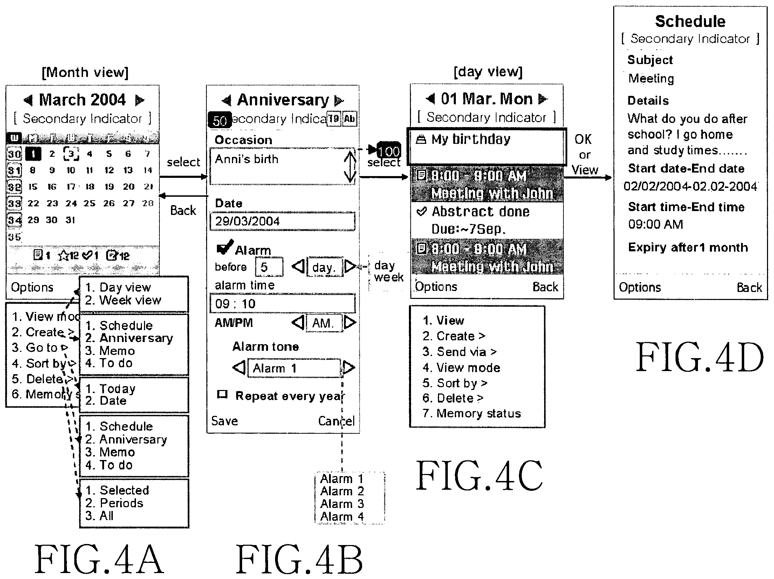

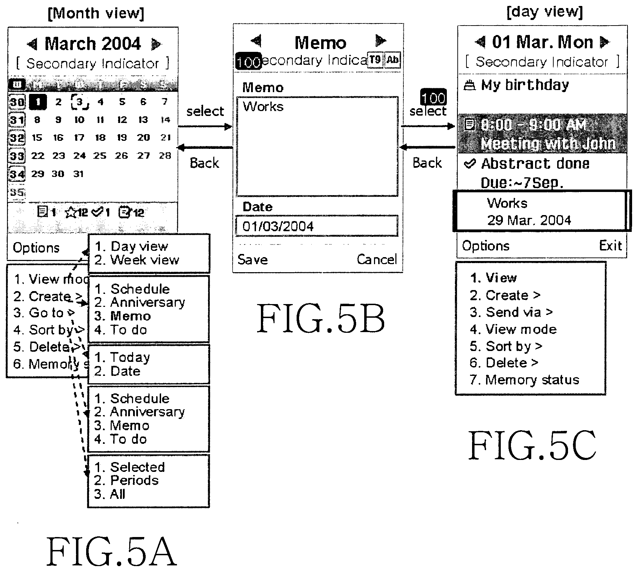

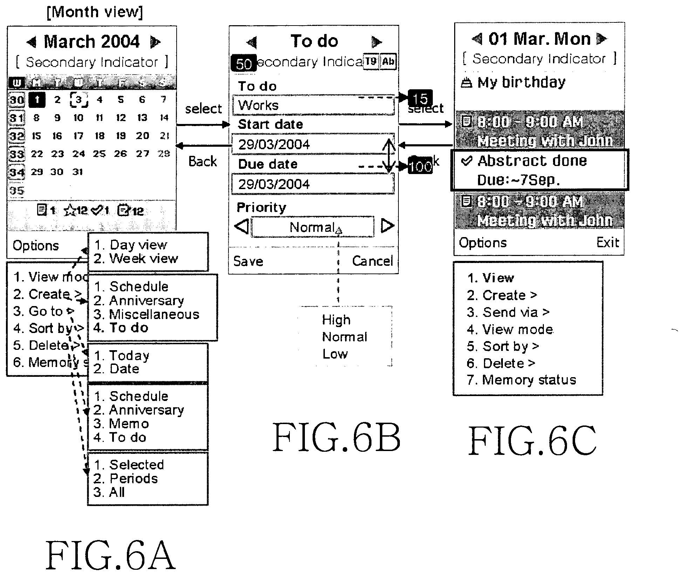

FIGS. 3 to 6 illustrate processes of registering the event information in an exemplary wireless terminal according to an embodiment of the present invention. FIG. 3 illustrates a process of registering the schedule as the event information in an exemplary wireless terminal according to an embodiment of the present invention, FIG. 4 illustrates a process of registering the anniversary as the event information in an exemplary wireless terminal according to an embodiment of the present invention, FIG. 5 illustrates a process of registering the memo as the event information in an exemplary wireless terminal according to an embodiment of the present invention, and FIG. 6 illustrates a process of registering the TO-DO item as the event information in an exemplary wireless terminal according to an embodiment of the present invention.

The process of registering the schedule as the event information will now be described with reference to FIG. 3. If schedule registration ("create" → "Schedule") is selected in the month view mode as shown in FIG. 3A, the controller 110 detects the selection of the schedule registration and converts to a schedule registration mode as shown in FIG. 3B. Upon completion of the registration of a corresponding schedule in FIG. 3B, the controller 110 detects the registration of the corresponding schedule and converts to the day view mode corresponding to today as shown in FIG. 3C. FIG. 3C can be changed depending on user's setting.

Next, the process of registering the anniversary as the event information will now be described with reference to FIG. 4. If anniversary registration ("create" → "Anniversary") is selected in the month view mode as shown in FIG. 4A, the controller 110 detects the selection of the anniversary registration and converts to an anniversary registration mode as shown in FIG. 4B. Upon completion of the registration of a corresponding anniversary in FIG. 4B, the controller 110 detects the completion of the registration and converts to the day view mode corresponding to today as shown in FIG. 4C. FIG. 4C can be changed depending on the user's setting.

If a corresponding schedule is selected from the menu of the event information displayed in the day view mode as shown in FIG. 4C, the controller 110 detects the selection of the corresponding schedule and displays details of the selected corresponding schedule as shown in FIG. 4D. In the details of the corresponding schedule displayed in FIG. 4D, the user can convert the wireless terminal to an edit mode, and edit the corresponding schedule.

Next, the process of registering the memo as the event information will now be described with reference to FIG. 5. If memo registration ("create" → "Memo") is selected in the month view mode as shown in FIG. 5A, the controller 110 detects the selection of the memo registration and converts to a memo registration mode as shown in FIG. 5B. Upon completion of registration of a corresponding memo in FIG. 5B, the controller 110 detects the completion of the registration and converts to the day view mode corresponding to today as shown in FIG. 5C. FIG. 5C can be changed depending on the user's setting.

Next, the process of registering the TO-DO item as the event information will be described with reference to FIG. 6. If TO-DO registration ("create" → "To do") is selected in the month view mode as shown in FIG. 6A, the controller 110 detects the selection of the TO-DO registration and converts to a TO-DO registration mode as shown in FIG. 6B. Upon completion of registration of a corresponding TO-DO in FIG. 6B, the controller 110 detects the completion of the registration and converts to the day view mode corresponding to today as shown in FIG. 6C. FIG. 6C can be changed depending on the user's setting.

After the event information is registered through the above processes, if it is currently a day when a corresponding event occurs, the controller 110 detects that it is the day when the corresponding event occurs, and controls a function to inform the display unit 160 of the occurrence of the corresponding event and display the corresponding event information.

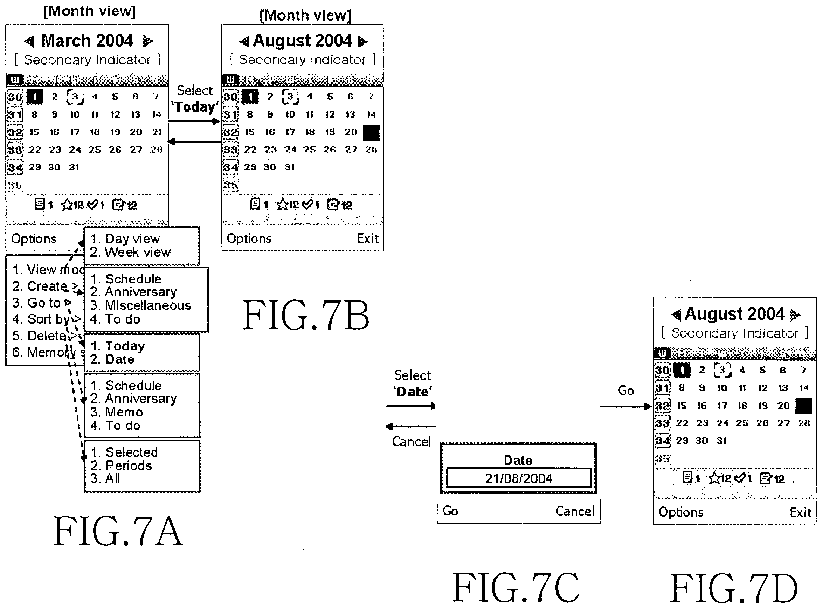

FIG. 7 illustrates a process of "Go to" in an exemplary wireless terminal according to an embodiment of the present invention.

A process of "Go to" the corresponding date will now be described with reference to FIG. 7. If "Go to Today" ("Go to" → "Today") is selected in the month view mode as shown in FIG. 7A, the controller 110 detects the selection of "Go to Today" and converts to a corresponding month view mode including today as shown in FIG. 7B. However, if "Go to date" ("Go to" → "Date") is selected in the month view mode, the controller 110 detects the selection of "Go to date" and converts to a mode for inputting a corresponding date where the "Go to" is to be executed, as shown in FIG. 7C. If the corresponding date is input in the date input mode, the controller 110 detects the input of the corresponding date and converts to the corresponding month view mode including the input corresponding date as shown in FIG. 7D.

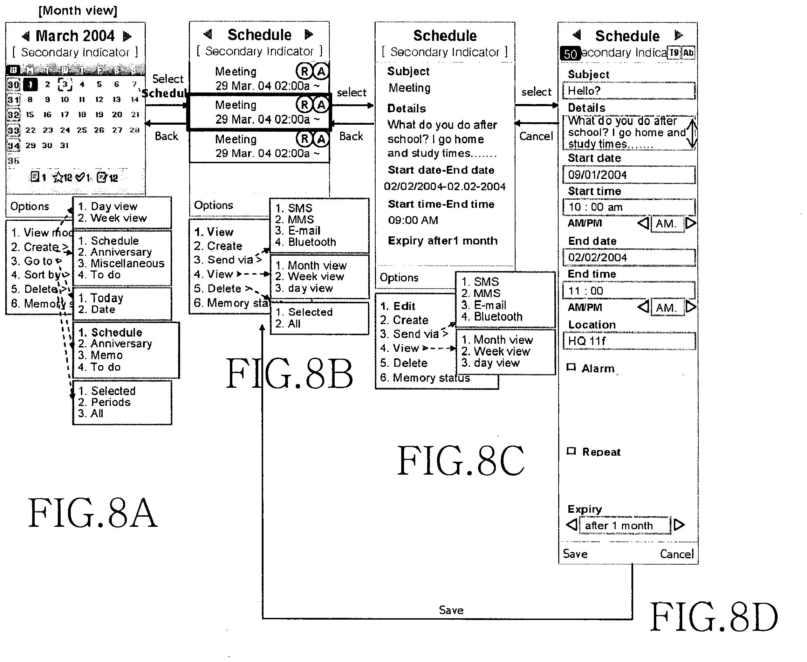

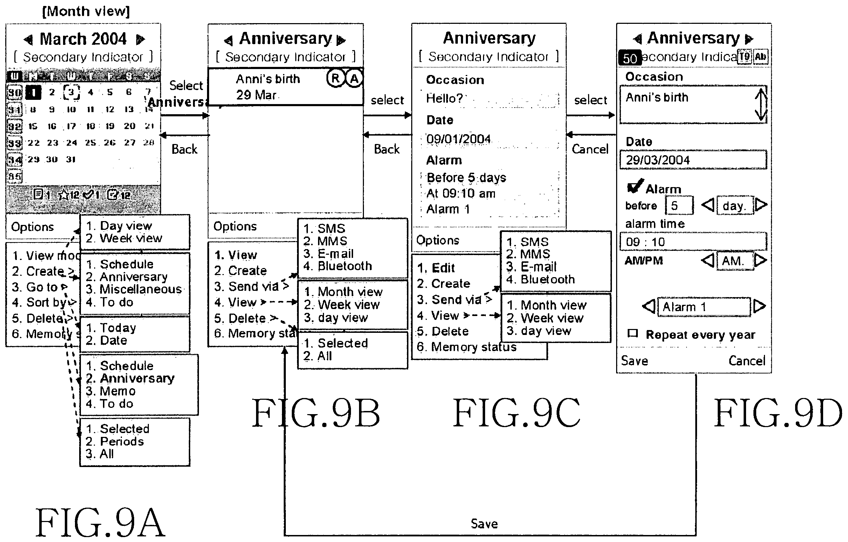

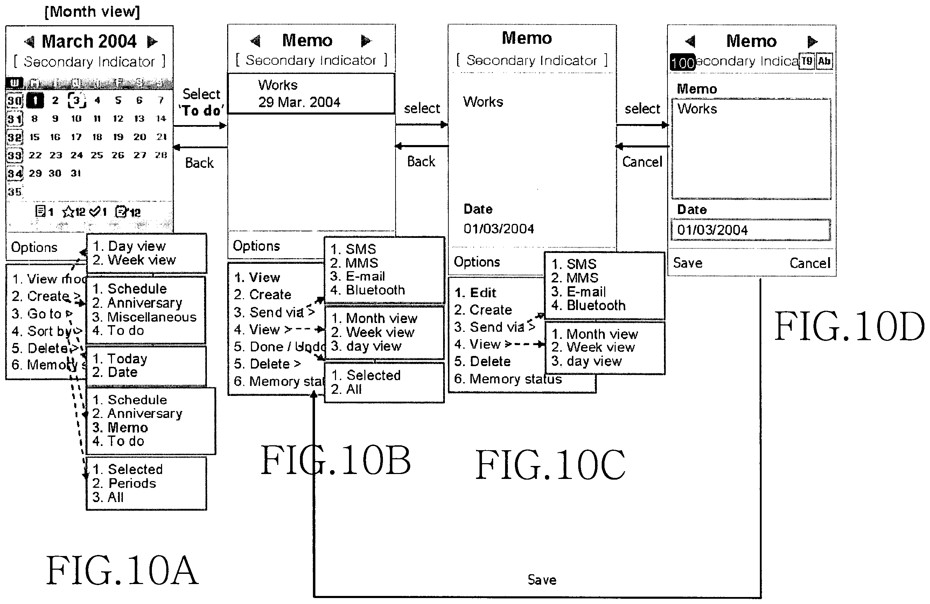

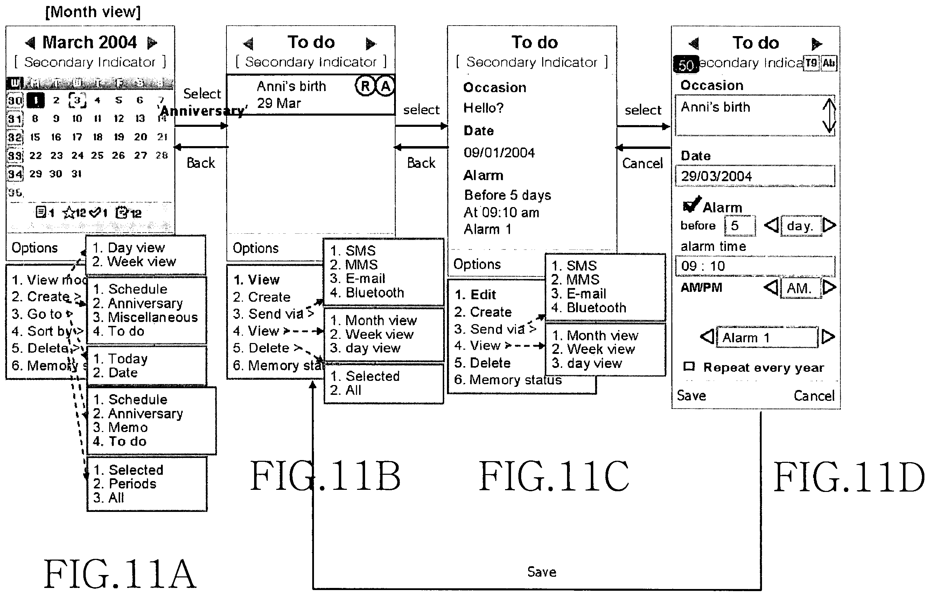

FIGS. 8 to 11 illustrate processes of sorting the event information in an exemplary wireless terminal according to an embodiment of the present invention. FIG. 8 illustrates the process of "Sort by schedule" as the event information in an exemplary wireless terminal according to an embodiment of the present invention, FIG. 9 illustrates the process of "Sort by anniversary" as the event information in an exemplary wireless terminal according to an embodiment of the present invention. FIG. 10 illustrates the process of "Sort by memo" as the event information in an exemplary wireless terminal according to an embodiment of the present invention, and FIG. 11 illustrates the process of "Sort by TO-DO" as the event information in an exemplary wireless terminal according to an embodiment of the present invention.

A process of the "Sort by schedule" as the event information will now be described with reference to FIG. 8. If "Sort by → Schedule" is selected in the month view mode as shown in FIG. 8A, the controller 110 detects the selection of the "Sort by → Schedule", and sorts and displays the registered schedule information by date as shown in FIG. 8B. If a corresponding schedule is selected from the schedule information sorted by date in FIG. 8B, the controller 110 detects the selection of the corresponding schedule and controls a function to display details of the selected corresponding schedule as shown in FIG. 8C. If the user selects "edit" from the details of the corresponding schedule displayed in FIG. 8C, the controller 110 detects the selection of the "edit" and converts to an edit mode of the selected corresponding schedule. Upon completion of edits of the corresponding schedule in the edit mode, the controller 110 detects the completion of the edits and converts to FIG. 8B, including the edited corresponding schedule and displays a menu of the corresponding schedule.

Next, a process of the "Sort by anniversary" as the event information will now be described with reference to FIG. 9. If "Sort by → Anniversary" is selected in the month view mode as shown in FIG. 9A, the controller 110 detects the selection of the "Sort by → Anniversary", and sorts and displays anniversary information registered every day as shown in FIG. 9B. If a corresponding anniversary is selected from the anniversary information sorted by date in FIG. 9B, the controller 110 detects the selection of the corresponding anniversary and controls a function to display details of the selected corresponding anniversary as shown in FIG. 9C. If the user selects "edit" from the details of the corresponding anniversary displayed in FIG. 9C, the controller 110 detects the selection of the "edit" and converts to an edit mode of the selected corresponding anniversary. Upon completion of edits of the corresponding anniversary in the edit mode, the controller 110 detects the completion of the edits and converts to FIG. 9B, including the edited corresponding anniversary and displays a menu of the corresponding anniversary.

Next, a process of the "Sort by memo" as the event information will now be described with reference to FIG. 10. If "Sort by → Memo" is selected in the month view mode as shown in FIG. 10A, the controller 110 detects the selection of the "Sort by → Memo", and sorts and displays memo information registered every day as shown in FIG. 10B. If a corresponding memo is selected from the memo information sorted by date in FIG. 10B, the controller 110 detects the selection of the corresponding memo and controls a function to display details of the selected corresponding memo as shown in FIG. 10C. If the user selects "edit" from the details of the corresponding memo displayed in FIG. 10C, the controller 110 detects the selection of the "edit" and converts to an edit mode of the selected corresponding memo. Upon completion of edits of the corresponding memo in the edit mode, the controller 110 detects the completion of the edits and converts to FIG. 10B, including the edited corresponding memo and displays a menu of the corresponding memo.

Next, a process of the "Sort by TO-DO" as the event information will now be described with reference to FIG. 11. If "Sort by → To do" is selected in the month view mode as shown in FIG. 11A, the controller 110 detects the selection of the "Sort by → To do", and sorts and displays TO-DO information registered every day as shown in FIG. 11B. If a corresponding TO-DO item is selected from the TO-DO information sorted by date in FIG. 11B, the controller 110 detects the selection of the corresponding TO-DO item and controls a function to display details of the selected corresponding TO-DO item as shown in FIG. 11C. If the user selects "edit" from the details of the corresponding TO-DO item displayed in FIG. 11C, the controller 110 detects the selection of the "edit" and converts to an edit mode of the selected corresponding TO-DO item. Upon completion of edits of the corresponding TO-DO item in the edit mode, the controller 110 detects the completion of the edits and converts to FIG. 11B, including the edited corresponding TO-DO item and displays a menu of the corresponding TO-DO information.

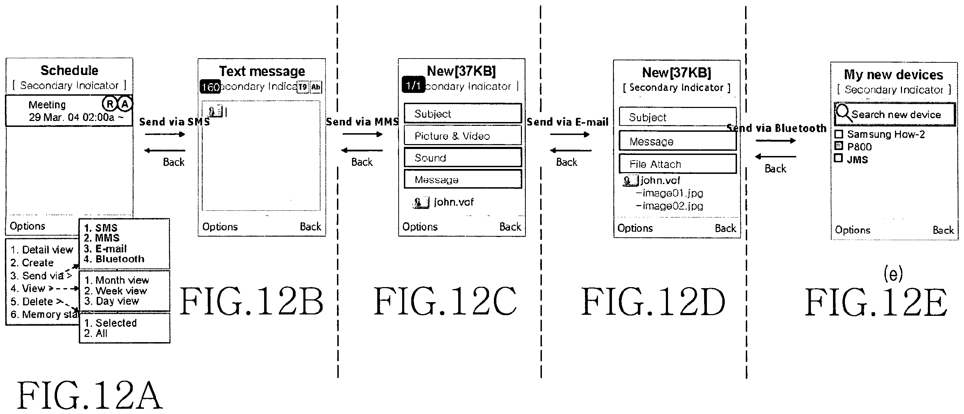

FIG. 12 illustrates a process of sending event information in an exemplary wireless terminal according to an embodiment of the present invention.

The process of sending event information will now be described with reference to FIG. 12. If the corresponding schedule is selected from the menu of the registered event information and then, "send via SMS" is selected as shown in FIG. 12A, the controller 110 detects the selection of the "send via SMS" and converts to a short message service (SMS) mode in which the selected corresponding schedule is attached as shown in FIG. 12B. However, if the corresponding schedule is selected from the menu of the registered event information and then, "send via MMS" is selected as shown in FIG. 12A, the controller 110 detects the selection of the "send via MMS" and converts to a multimedia messaging service (MMS) mode in which the selected corresponding schedule is attached in a file as shown in FIG. 12C. If the corresponding schedule is selected from the menu of the registered event information and then, "send via E-mail" is selected as shown in FIG. 12A, the controller 110 detects the selection of the "send via E-mail" and converts to an electronic mail (E-mail) mode in which the selected corresponding schedule is attached in a file as shown in FIG. 12C. If the corresponding schedule is selected from the menu of the registered event information and then, "send via Bluetooth" is selected as shown in FIG. 12A, the controller 110 detects the selection of the "send via Bluetooth" and converts to a Bluetooth mode for sending the selected corresponding schedule as shown in FIG. 12E.

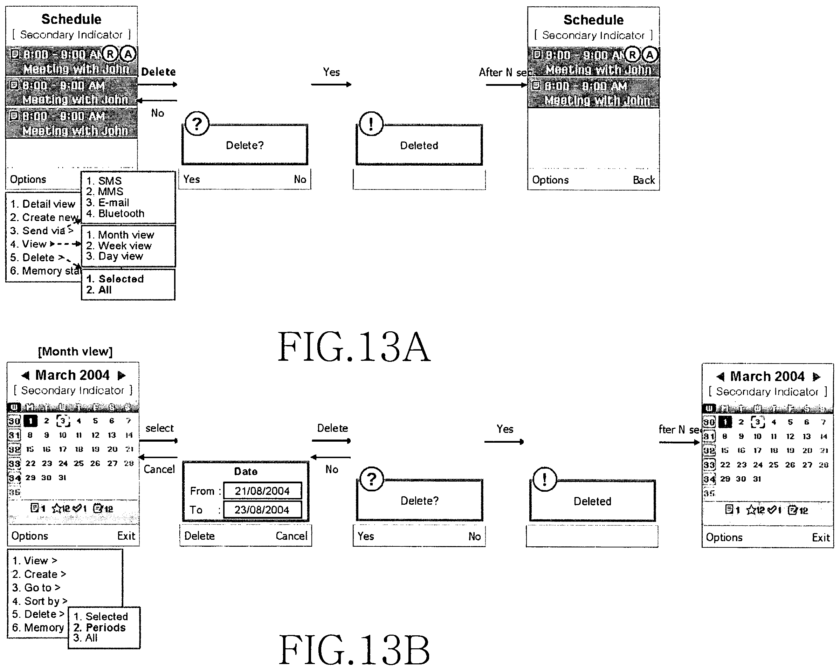

FIG. 13 illustrates a process of deleting event information in an exemplary wireless terminal according to an embodiment of the present invention.

The process of deleting the event information will now be described with reference to FIG. 13. If the corresponding schedule is selected from the menu of the registered event information as shown in FIG. 13A and then, "delete" is selected, the controller 110 detects the selection of the "delete" and deletes the selected corresponding schedule. However, if "period" is selected from a menu of the "delete" in the month view mode as shown in FIG. 13B, the controller 110 detects the selection of the "period" and converts to a period input mode for deleting the menu of the registered event information within the period. If the period is input in the period input mode, the controller 110 detects the input of the period, deletes the menu of the registered event information within the input period, and converts to the month view mode. In the month view mode, the menu of the "delete" is provided as "Selected", "Period", and "All". In the week view mode, the menu of the "delete" is provided as "Selected", "Period", "This week", and "All". In the day view mode, the menu of the "delete" is provided as "Selected", "This week", and "All".

Accordingly, embodiments of the present invention provide a method for managing the event information in an exemplary wireless terminal, thereby providing an effect in that the wireless terminal user can manage a variety of event information such as schedules, anniversaries, memos, and TO-DO items, with simplicity and convenience.

## Claims

1. A device for managing event information of a calendar in a wireless terminal, the device comprising:
a displaying unit (160);
an input unit (127);
a transceiver(123);
and a controller (110),
**characterized in that** the controller is configured to:
control the displaying unit (160) to display at least one identifier which indicates that at least one registered event information is registered within a display area of a date on a month view of the calendar, the at least one registered event information being one of a variety of event information, and to display on the month view a numeral and an icon corresponding to the numeral, wherein the numeral indicates a number of times of registration of the registered event information displayed in the month view and the icon distinguishes the at least one registered event information from other event information of the variety of event information;
attach a file to an electronic mail, the file including selected event information in response to a user request for sending the selected event information to an another device; and
control the transceiver (123) to send the electronic mail with the attached file to the another device.

2. The device of claim 1, wherein the controller (110) is further configured to control the displaying unit (160) to display a plurality of identifiers in a month which is displayed on the month view of the calendar, each of the plurality of event identifiers corresponding to one of the variety of event information, the event identifiers being visually distinguished from other event information of the variety of event information.

3. The device of claim 2, wherein the variety of event information comprises at least two of a schedule (S), an anniversary (A), a memo (M) and a TO-DO item (T).

4. The device of claim 1, wherein the controller (110) is further configured to create To-Do items in the calendar and wherein the controller (110) is further configured to control the displaying unit (160) to display the created To-Do items and to control the transceiver (123) to send at least one of the To-Do items to the another device.

5. The device of claim 1, wherein the transceiver (123) is configured to send the electronic mail with the attached file by wireless communication.

6. The device of claim 1, wherein the controller (110) is further configured to control the displaying unit (160) to display at least one of a day view, a month view, and a week view according to a user input.

7. A method for managing event information of a calendar in a wireless terminal, the method comprising the steps of:
controlling a displaying unit of the wireless terminal to display at least one identifier which indicates that at least one registered event information is registered within a display area of a date on a month view of the calendar, the at least one registered event information being one of a variety of event information, and to display on the month view a numeral and an icon corresponding to the numeral, wherein the numeral indicates a number of times of registration of the registered event information displayed in the month view and the icon distinguishes the at least one registered event information from other event information of the variety of event information;
attaching a file to an electronic mail, the file including selected event information in response to a user request for sending the selected event information to an another device; and
controlling a transceiver to send the electronic mail with the attached file to the another device.

8. The method of claim 7, further comprising the step of controlling the displaying unit to display a plurality of identifiers in a month which is displayed on the month view of the calendar, each of the plurality of event identifiers corresponding to one of the variety of event information, the event identifiers being visually distinguished from other event information of the variety of event information.

9. The method of claim 8, wherein the variety of event information comprises at least two of a schedule (S), an anniversary (A), a memo (M) and a TO-DO item (T).

10. The method of claim 7, further comprising creating To-Do items in the calendar, displaying the created To-Do items in the calendar, and sending at least one of the To-Do items to the another device.

11. The method of claim 7, further comprising displaying at least one of a day view, a month view, and a week view according to a user input.

## Patentansprüche

1. Vorrichtung zum Verwalten von Ereignisinformationen eines Kalenders in einem drahtlosen Endgerät, wobei die Vorrichtung umfasst:
eine Anzeigeeinheit (160);
eine Eingabeeinheit (127);
einen Sendeempfänger (123);
und eine Steuerung (110),
**dadurch gekennzeichnet, dass** die Steuerung zu Folgendem konfiguriert ist:
Steuern der Anzeigeeinheit (160) dazu, mindestens einen Bezeichner anzuzeigen, der angibt, dass mindestens eine registrierte Ereignisinformation in einem Anzeigebereich eines Datums in einer Monatsansicht des Kalenders registriert ist, wobei die mindestens eine registrierte Ereignisinformation eine aus einer Vielzahl von Ereignisinformationen ist, und auf der Monatsansicht eine Zahl und ein der Zahl entsprechendes Symbol anzuzeigen, wobei die Zahl eine Anzahl von Malen der Registrierung der in der Monatsansicht angezeigten registrierten Ereignisinformation angibt und das Symbol die mindestens eine registrierte Ereignisinformation von anderen Ereignisinformationen der Vielzahl von Ereignisinformation unterscheidet;
Anhängen einer Datei an eine E-Mail, wobei die Datei ausgewählte Ereignisinformationen als Antwort auf eine Benutzeranforderung zum Senden der ausgewählten Ereignisinformationen an eine andere Vorrichtung enthält; und
Steuern des Sendeempfängers (123) dazu, die E-Mail mit der angehängten Datei an eine andere Vorrichtung zu senden.

2. Vorrichtung nach Anspruch 1, wobei die Steuerung (110) des Weiteren dazu konfiguriert ist, die Anzeigeeinheit (160) so zu steuern, dass sie eine Vielzahl von Bezeichnern in einem Monat anzeigt, der in der Monatsansicht des Kalenders angezeigt wird, wobei jeder aus der Vielzahl von Ereignisbezeichnern einer der Vielzahl von Ereignisinformationen entspricht, wobei die Ereignisbezeichner visuell von anderen Ereignisinformationen der Vielzahl von Ereignisinformationen unterschieden werden.

3. Vorrichtung nach Anspruch 2, wobei die Vielzahl von Ereignisinformationen mindestens zwei aus einem Zeitplan (S), einem Jahrestag (A), einem Memo (M) und einem Aufgabenelement (T) umfasst.

4. Vorrichtung nach Anspruch 1, wobei die Steuerung (110) des Weiteren dazu konfiguriert ist, Aufgabenelemente in dem Kalender zu erstellen, und wobei die Vorrichtung (110) des Weiteren dazu konfiguriert ist, die Anzeigeeinheit (160) so zu steuern, dass sie die erstellten Aufgabenelemente anzeigt, und den Sendeempfänger (123) so zu steuern, dass er mindestens eines der Aufgabenelemente an die andere Vorrichtung sendet.

5. Vorrichtung nach Anspruch 1, wobei der Sendeempfänger (123) dazu konfiguriert ist, die E-Mail mit der angehängten Datei durch drahtlose Kommunikation zu senden.

6. Vorrichtung nach Anspruch 1, wobei die Steuerung (110) des Weiteren dazu konfiguriert ist, die Anzeigeeinheit (160) so zu steuern, dass sie mindestens eine aus einer Tagesansicht, einer Monatsansicht und einer Wochenansicht entsprechend einer Benutzereingabe anzeigt.

7. Verfahren zum Verwalten von Ereignisinformationen eines Kalenders in einem drahtlosen Endgerät, wobei das Verfahren folgende Schritte umfasst:
Steuern einer Anzeigeeinheit des drahtlosen Endgeräts dazu, mindestens einen Bezeichner anzuzeigen, der angibt, dass mindestens eine registrierte Ereignisinformation in einem Anzeigebereich eines Datums in einer Monatsansicht des Kalenders registriert ist, wobei die mindestens eine registrierte Ereignisinformation eine aus einer Vielzahl von Ereignisinformationen ist, und auf der Monatsansicht eine Zahl und ein der Zahl entsprechendes Symbol anzuzeigen, wobei die Zahl eine Anzahl von Malen der Registrierung der in der Monatsansicht angezeigten registrierten Ereignisinformation angibt und das Symbol die mindestens eine registrierte Ereignisinformation von anderen Ereignisinformationen der Vielzahl von Ereignisinformation unterscheidet;
Anhängen einer Datei an eine E-Mail, wobei die Datei ausgewählte Ereignisinformationen als Antwort auf eine Benutzeranforderung zum Senden der ausgewählten Ereignisinformationen an eine andere Vorrichtung enthält; und
Steuern des Sendeempfängers dazu, die E-Mail mit der angehängten Datei an eine andere Vorrichtung zu senden.

8. Verfahren nach Anspruch 7, des Weiteren umfassend den Schritt zum Steuern der Anzeigeeinheit dazu, eine Vielzahl von Bezeichnern in einem Monat anzuzeigen, der in der Monatsansicht des Kalenders angezeigt wird, wobei jeder aus der Vielzahl von Ereignisbezeichnern einer der Vielzahl von Ereignisinformationen entspricht, wobei die Ereignisbezeichner visuell von anderen Ereignisinformationen der Vielzahl von Ereignisinformationen unterschieden werden.

9. Verfahren nach Anspruch 8, wobei die Vielzahl von Ereignisinformationen mindestens zwei aus einem Zeitplan (S), einem Jahrestag (A), einem Memo (M) und einem Aufgabenelement (T) umfasst.

10. Verfahren nach Anspruch 7, des Weiteren umfassend das Erstellen von Aufgabenelementen in dem Kalender, das Anzeigen der erstellten Aufgabenelemente in dem Kalender und das Senden von mindestens einem der Aufgabenelemente an die andere Vorrichtung.

11. Verfahren nach Anspruch 7, des Weiteren umfassend das Anzeigen von mindestens einem aus einer Tagesansicht, einer Monatsansicht und einer Wochenansicht entsprechend einer Benutzereingabe.

## Revendications

1. Dispositif de gestion d'information d'événement d'un calendrier dans un terminal sans fil, le dispositif comprenant :
une unité d'affichage (160) ;
une unité d'entrée (127) ;
un émetteur-récepteur (123) ; et
un contrôleur (110),
**caractérisé en ce que** le contrôleur est configuré pour :
contrôler l'unité d'affichage (160) pour afficher au moins un identifiant qui indique qu'au moins une information d'événement enregistrée est enregistrée dans une zone d'affichage d'une date dans une vue mensuelle du calendrier, ladite au moins une information d'événement enregistrée étant une information parmi une variété d'informations d'évènement, et pour afficher dans la vue mensuelle un nombre et une icône correspondant au nombre, dans lequel le nombre indique un nombre d'enregistrements de l'information d'événement enregistrée affichée dans la vue mensuelle et l'icône distingue ladite au moins une information d'événement enregistrée d'autre information d'événement parmi la variété d'informations d'événement ;
attacher un fichier à un message électronique, le fichier comportant de l'information d'événement sélectionnée en réponse à une requête d'utilisateur pour envoyer l'information d'événement sélectionnée à un autre dispositif ; et
contrôler l'émetteur-récepteur (123) pour envoyer le message électronique avec le fichier attaché audit autre dispositif.

2. Dispositif selon la revendication 1, dans lequel le contrôleur (110) est en outre configuré pour contrôler l'unité d'affichage (160) pour afficher une pluralité d'identifiants dans un mois qui est affiché dans la vue mensuelle du calendrier, chaque identifiant de la pluralité d'identifiants d'évènement correspondant à une information de la variété d'informations d'évènement, les identifiants d'évènement se distinguant visuellement d'autres informations d'évènement de la variété d'informations d'évènement.

3. Dispositif selon la revendication 2, dans lequel la variété d'informations d'évènement comprend au moins deux informations parmi un agenda (S), un anniversaire (A), une annotation (M) et une tâche à accomplir (T).

4. Dispositif selon la revendication 1, dans lequel le contrôleur (110) est en outre configuré pour créer des tâches à accomplir dans le calendrier, et dans lequel le contrôleur (110) est en outre configuré pour contrôler l'unité d'affichage (160) pour afficher les tâches à accomplir créées et pour contrôler l'émetteur-récepteur (123) pour envoyer au moins l'une des tâches à accomplir audit autre dispositif.

5. Dispositif selon la revendication 1, dans lequel l'émetteur-récepteur (123) est configuré pour envoyer le message électronique avec le fichier attaché par communication sans fil.

6. Dispositif selon la revendication 1, dans lequel le contrôleur (110) est en outre configuré pour contrôler l'unité d'affichage (160) pour afficher au moins une vue parmi une vue journalière, une vue mensuelle et une vue hebdomadaire conformément à une entrée d'utilisateur.

7. Procédé de gestion d'information d'événement d'un calendrier dans un terminal sans fil, le procédé comprenant les étapes suivantes :
contrôle d'une unité d'affichage du terminal sans fil pour afficher au moins un identifiant qui indique qu'au moins une information d'événement enregistrée est enregistrée dans une zone d'affichage d'une date dans une vue mensuelle du calendrier, ladite au moins une information d'événement enregistrée étant une information parmi une variété d'informations d'évènement, et pour afficher dans la vue mensuelle un nombre et une icône correspondant au nombre, dans lequel le nombre indique un nombre d'enregistrements de l'information d'événement enregistrée affichée dans la vue mensuelle et l'icône distingue ladite au moins une information d'événement enregistrée d'autres informations d'événement de la variété d'informations d'événement ;
attachement d'un fichier à un message électronique, le fichier comportant de l'information d'événement sélectionnée en réponse à une requête d'utilisateur pour envoyer l'information d'événement sélectionnée à un autre dispositif ; et
contrôle d'un émetteur-récepteur pour envoyer le message électronique avec le fichier attaché audit autre dispositif.

8. Procédé selon la revendication 7, comprenant en outre l'étape de contrôle de l'unité d'affichage pour afficher une pluralité d'identifiants dans un mois qui est affiché dans la vue mensuelle du calendrier, chaque identifiant de la pluralité d'identifiants d'événement correspondant à une information de la variété d'informations d'évènement, les identifiants d'événement se distinguant visuellement d'autres informations d'événement de la variété d'informations d'événement.

9. Procédé selon la revendication 8, dans lequel la variété d'informations d'événement comprend au moins deux informations parmi un agenda (S), un anniversaire (A), une annotation (M) et une tâche à accomplir (T).

10. Procédé selon la revendication 7, comprenant en outre la création de tâches à accomplir dans le calendrier, l'affichage des tâches à accomplir créées dans le calendrier, et l'envoi d'au moins l'une des tâches à accomplir audit autre dispositif.

11. Procédé selon la revendication 7, comprenant en outre l'affichage d'au moins une vue parmi une vue journalière, une vue mensuelle et une vue hebdomadaire conformément à une entrée d'utilisateur.
